# EUROPEAN PATENT SPECIFICATION

(11) **EP 1 585 182 B1**
(45) Date of publication and mention of the grant of the patent: **30.06.2010**
(21) Application number: 04101403.6
(22) Date of filing: 05.04.2004
(51) Int. Cl.: H01M 2/16

(54) **Lead-acid battery with microfibre separator having improved absorption characteristics**
Bleiakkumulator, der einen Mikrofaserseparator mit verbesserten Absorptioneigenschaften enthält
Batterie au plomb avec un séparateur en microfibres ayant des caractéristiques d'absorption améliorées

(43) Date of publication of application: 12.10.2005
(73) Proprietor: Exide Technologies, S.A., 28027 Madrid (ES)
(72) Inventor: FERNANDEZ GARCIA, Melchor SOCIEDAD ESPANOLA DEL ACUMULADOR TUDOR,S.A., 28027 Madrid (ES); SORIA GARCIA RAMOS, Maria Luisa SOCIEDAD ESPANOLA DEL ACUMULADOR TUDOR,S.A., 28027 Madrid (ES); TRINIDAD LOPEZ, Francisco SOCIEDAD ESPANOLA DEL ACUMULADOR TUDOR, S.A., 28027 Madrid (ES)
(74) Representative: Elzaburu Marquez, Alberto

(56) References cited:
- EP-A- 0 466 302
- EP-A- 0 680 105
- WO-A-95/03635
- WO-A-03/061030
- PATENT ABSTRACTS OF JAPAN vol. 018, no. 626 (E-1636), 29 November 1994 (1994-11-29) & JP 06 243850 A (JAPAN STORAGE BATTERY CO LTD), 2 September 1994 (1994-09-02)

## Description

### FIELD OF THE INVENTION

This invention refers to an electric storage battery of the valve-regulated lead-acid type, comprising microfibre separators having improved absorption characteristics.

### BACKGROUND OF THE INVENTION

Etectrochemical cells, such as lead-acid batteries, are known since the end of last century. In their current configuration they comprise a lead dioxide anode, a soft lead cathode and a separator made of cellulose or plastic material, which material has the mission of physically separating the plates, also supplying a passageway through the electrolyte for the electric current conductor ions.

The new applications currently required for batteries have made it necessary for the technological developments achieved in this and prior decades to focus mainly on obtaining batteries with minimum or no maintenance requirements, minimum gas emissions, allowing their installation in "clean" environments and an optimum working life period, to suit applications requiring a high number of charge-discharge cycles, such as electric vehicle and traction applications.

These advances have been achieved working fundamentally upon the characteristics of the separator employed, which has allowed putting into operation the so called "oxygen cycle" in the lead acid battery, leading to recombination or valve regulated batteries (VRLA).

The operating characteristics and principle of these batteries is described in U.S. patents 3,862,861 and 4,383,011, U.K. patents GB 2 062 945 and GB 2 060 987 and Spanish patents 526,291 and 524,556, which describe the modifications introduced as regards plates, containers and covers as well as fundamentally at separator level. Regarding this component, its properties and composition are described in U.S. patent 5,091,275 and in European patent application 0,466,302 A1.

The separators for batteries using the "oxygen cycle" are essentially made up of a bed of non-woven fibres formed by a physical mixture of said fibres arranged at random. In order to provide the separator with the properties required for its application in the battery, the base fibre must have very precise size characteristics: Namely, its length must be around 10 µm and its diameter in the 0.1 - 1 µm range. These basic microfibre properties allow obtaining a separator featuring the following characteristics: a porosity of about 90-95% with a pore diameter of around 5-25 µm, a specific surface in the 0.8-2.0 m²/g range, a tensile strength of around 600 N*m and an electric resistivity of around 0.025 Ω*cm².

The characteristics of the separator obtained may be modified to some extent by a modification of the characteristics of the base fibre. The above mentioned base fibre modification essentially refers to its dimensional characteristics. In this sense, the use of smaller microfibres leads to separator materials with a greater specific surface, greater acid retention capacity and a smaller pore size. The use of larger microfibres would modify these properties in the opposite direction, taking nevertheless into account that separator properties cannot be varied indefinitely but only within relatively narrow margins.

However, the characteristics of the glass microfibre separator may be strongly modified through the addition of inorganic fillers in different varieties and concentrations. These inorganic fillers deposit within the structure of the separator, and strongly modify its characteristics, especially those relating to porosity and pore size distribution.

Among inorganic fillers, the most frequently used is silica in different varieties and concentrations. There are a number of patent documents related with the use of silica either alone, or as a mixture with inorganic salts, binders and the like, in battery separators.

A number of patent documents deal with the addition of an inorganic filler, especially silica, to the battery separator to modify its characteristics, but in most cases the documents relate to the use of a mixture that includes the silica itself with inorganic salts, typically magnesium salts, in addition to a binder as, for instance, in US patents 5,091,275, 5,605,569, international publication WO 91/16,733, and European patent EP 0,466,302. In other cases, the base material of the separator is not glass microfibre but is of a different nature, normally polymeric, and hence the effect of silica is different, as in patents US 4,681,750, and UK 2,169,129A. In yet other cases the concentration of silica added is very different from the range claimed in the present specification, typically much higher, well above 10%. Concerning the characteristics of the silica, most of the prior art documents disclose the use of silica with a specific surface area lower than 250 m²/g, although in some cases silica with a higher specific surface area is disclosed.

In particular, US 5,009,971, issued to Johnson et al, discloses separators for valve-regulated lead-acid batteries comprising silica having specific surface from 30 to 700 m²/g. However, such separators almost completely consist of silica, since silica is present in the extremely high concentrations of 93 to 99.5%.

US 5,336,573, issued to Zuckerbrod, discloses battery separators comprising as fillers, among others, precipitated silica. However, the base material for the separator is a polyolefin, and the filler amounts from 20 to 75% by weight.

US 6,124,059, issued to Bohnstedt, discloses separators for lead-acid batteries comprising pyrogenic silica as filler and precipitated silica as a further filler. Such precipitated silica has a BET surface area of 60 to 700 m²/g, and the base material is again a thermoplastic polymer. The filler content is more than 60% up to a maximum of 80% vol. relative to the solid separator material.

Finally, EP 0,680,105, discloses batteries including separators comprising only silica, without any other component, in amounts of 1 to 20%, said separator having a reduced pore size between 5 and 10 microns. However, the silica used in this document has a specific surface of only 200-300 m²/g, which is insufficient to promote the desired changes in the absorption characteristics of the separator and in the battery that includes such separator.

The use of silica typically requires the use of a large quantity of the same in order to achieve the required separator characteristics. However, the addition of a high silica concentration to the battery separator produces a series of detrimental effects for the separator, and for the battery incorporating the same. Such detrimental effects can be summarized as follows:
- A decrease in the total porosity of the separator, due to filling the void space with a high quantity of inert material, and also due to the preferential deposition of the silica on the large pores that are the ones that contribute in higher proportion to the total porosity of the material. Decreasing the total porosity of the separator produces in turn deleterious effects in key properties of the material such as the acid retention capacity. In valve regulated lead-acid batteries, most of the acid, roughly 2/3, is retained in the separator within the pores of the material, and any decrease in porosity will decrease the acid retention capacity of the separator.
- A strong modification of the pore size distribution of the separator. In fact the results from pore size and pore size distribution tests performed in glass microfibre separators charged with low concentrations, about 6% of silica, shows a strong modification of the pore size distribution, resulting in a decrease of 35% in the number of larger pores, a 30% decrease with respect to the number of intermediate size pores, and only a 17% decrease with respect to the number of small size pores.
   Shifting the pore size distribution to low values too much has adverse effects on the wicking characteristics of the separator. The wicking rate (measured as the height that the acid climbs on the separator in a determined time) is inversely proportional to the pore size distribution, so that the lower the pore size, the lower the wicking rate. At battery level, the decrease of the wicking rate can have harmful effects on the operation of filling the battery with the acidic electrolyte. If it takes more time for the electrolyte to wet all parts of the group of plates of the cell, it is possible that, due to the sulphation reactions that occur in the plates during filling, the inner parts of the cell can develop alkaline conditions that promote the conditions for development of the so-called lead dendrites through the separator, provoking immediate failure of the battery.
   Another additional harmful effect of shifting pore size distribution to low values too much is decrease in the oxygen transport characteristics of the separator. The lower the pore size, the higher the tortuosity factor will be, and consequently the lower the oxygen diffusion characteristics of the separator will be. Lowering oxygen transport characteristics means, at the battery level, decreasing the oxygen recombination characteristics, that in turn determines one of the most important characteristics of VRLA batteries, that is to be totally maintenance free.
- A decrease in the mechanical characteristics of the separator, reducing the tensile strength and making it less suitable for the battery manufacturing process, because it is more prone to breaking. Decrease in mechanical strength is a result of the adverse effect of the silica addition on the accommodation of the microfibres within the structure of the separator. Mechanical strength of glass microfibre materials is a result of the degree of interlocking of the microfibres. Silica, due to its very low particle size, tends to deposit over the surface of the microfibres making the interlocking of the same more difficult. The higher the silica content, the more the particle interlocking will be hampered and consequently the higher the decrease in mechanical characteristics.

### SUMMARY OF THE INVENTION

The problem to be solved by the present invention is to provide a valve-regulated lead-acid battery comprising glass microfibre or plastic microfibre separators without the disadvantages caused by high silica contents as filler of the said separators.

The solution is based on providing a valve-regulated lead-acid battery comprising glass microfibre or plastic microfibre separators to which a filler consisting of a low concentration (2 to 8°C by weight) of silica with a high specific surface (above 700 m²/g) has been added, according to claim 1. Due to the provision of such a low concentration of silica having an extremely high specific surface, the acid retention ability of the separator is preserved without the disadvantages caused by high silica contents. Despite the prior art, it has also been found that no binder or any other additive is necessary as a component of the filler in order to maintain the physical integrity of the separator or to form the separator into a sheet shape. Therefore, the filler consists of only the high specific surface silica cited. No other components need to be added to the separator in accordance with the present invention.

Therefore, in a first aspect the invention refers to a battery including separators comprising glass microfibres, plastic microfibres or a mixture of both, characterised in that the separators consist substantially of the cited microfibres and a filler consisting of 2 to 8% (w/w) silica having a specific surface higher than 700 m²/g.

In a second aspect, the invention refers to a process to produce a valve-regulated lead-acid battery, characterised in that the separator, previously to its assembly with the positive and negative plates, is loaded with a filler consisting of 2% to 8% (w/w) silica having a specific surface higher than 700 m²/g.

In a third aspect, the invention refers to the use of a valve-regulated lead-acid battery for high cycle life applications, such as heavy-duty applications.

### Advantages of the invention:

Due to inclusion in the battery separator of a filler consisting of a low concentration of high specific surface silica on the separator, the following properties of the separator (and therefore, of the battery including such separator) are substantially modified:
a) Porosity: This parameter does not change substantially with respect to that of the 100% microfibre separator. The material retains a very high degree of porosity of around 90-95%, because the silica particles, due to their small size, fundamentally fill up the larger size pores in the structure of the separator. Taking into account the low proportion of silica used, this leads to full preservation of the porosity.
b) Pore size: The separator pore size decreases, up to about 30% in reduction of the pore size when the silica concentration increases from 0 to 6%. This is particularly due to a decrease in those pores having maximum size. The explanation of this fact resides in the preferential deposition of silica inside the larger size pores within the separator structure. This effect has a strong influence on the behaviour and working life of the battery, especially in applications requiring deep and particularly repetitive cycles, such as batteries used in motive power applications (forklifts) as well as batteries to be used in electric vehicles. It also significantly improves the behaviour of batteries in floating applications for uninterrupted power supplies, telephone exchanges, etc., particularly at facilities where equalizing charges are not employed.
c) Specific surface: The specific surface of the microfibre separator undergoes a very strong increase due to the inclusion of silica in its structure. The increase is of around 1000% for 4% silica additions and 1500% for 6% silica additions. The explanation is the high specific surface of the silica when compared with that of plastic microfibre or glass microfibre. In fact, whereas microfibre has a specific surface of about 2 m²/g, the silica used has a value higher than or around 700 m²/g. Therefore, minor additions such as those already mentioned lead to spectacular increases in the specific surface of the separator. Such a material with very high specific surface can strongly suppress the acid stratification that develops inside the battery during cycling: The wicking characteristics of the glass microfibre separators is in direct relation to the pore size distribution, so that the smaller the pore size, the higher the wicking ability, and hence the higher the acid retention along the height of the separator. In these circumstances, the acid movement within the structure of the material will be hindered, resulting in a higher resistance of the silica loaded materials to develop acid stratification. The suppression of the acid stratification involves the elimination of the deleterious effects associated with it, such as grid corrosion and growth, resulting in a substantial increase in the expected cycle life.

Overall, these effects produce a substantial increase in the achievable working life, a lower corrosion of the grids and a decrease in the number of possible failure modes such as short-circuits through the separator.

These and other advantages will be shown in detail in the examples below.

### DRAWINGS

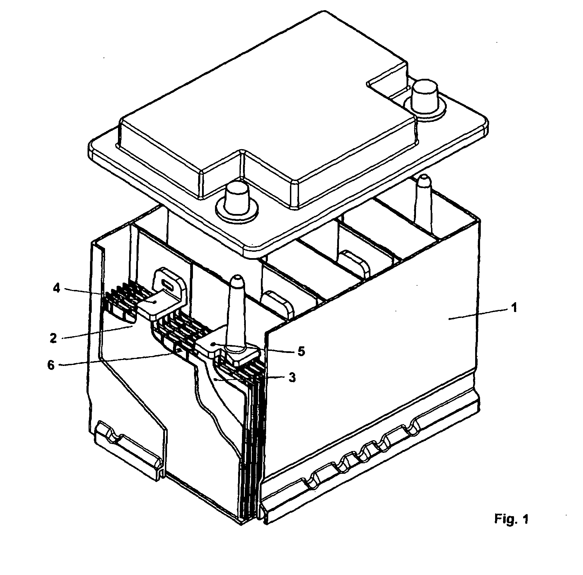

Figure 1 is a schematic perspective of a battery according to the invention. The battery shown in Figure 1 includes a container (1), within which the positive (2) and negative (3) plates are assembled, both of them joined together through their corresponding connection straps (4) and (5). Between plates (2) and (3) several separators (6) made of a material based on glass microfibre or plastic type material or a mixture of both are placed. To this material, a certain proportion of silica has been added during the manufacturing process, said silica being incorporated into the structure of the separator (6), thereby modifying its absorption characteristics. The battery with the characteristics of the invention may adopt a configuration different to that described.

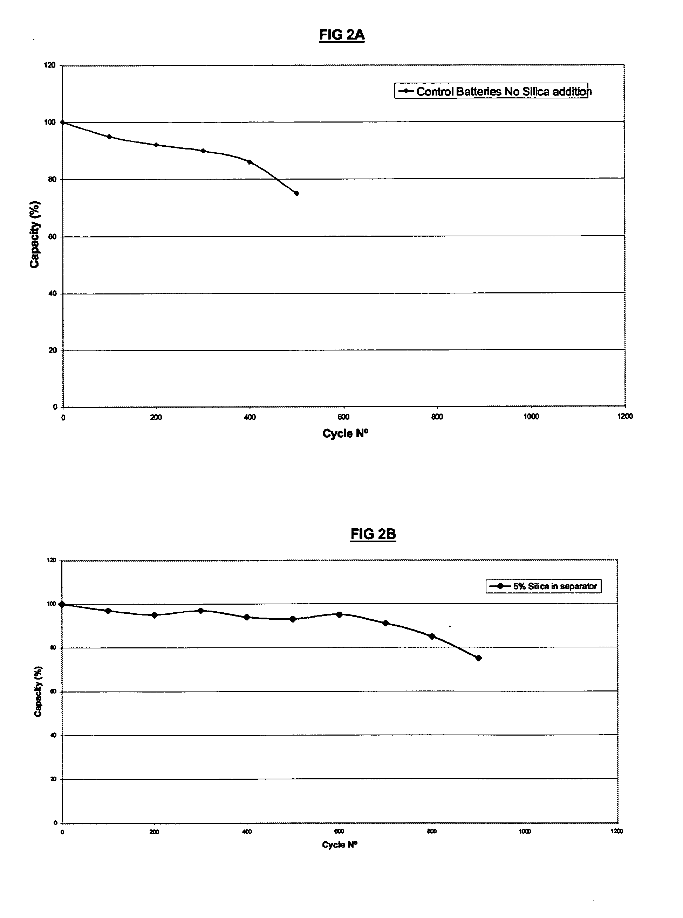

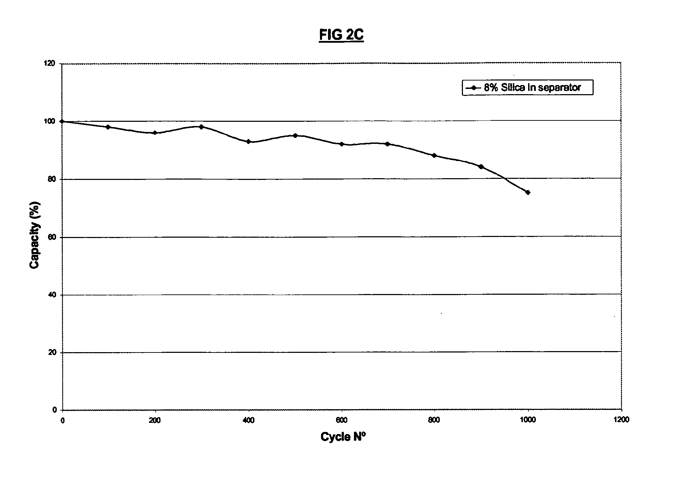

Figures 2A, 2B and 2C are schematic diagrams representing the behaviour of batteries with different characteristics regarding the separator used and the filler of such separator, showing voltage values in the Y (vertical) axis and number of cycles in the X (horizontal) axis.

### DETAILED DESCRIPTION OF THE INVENTION:

In accordance with the present invention, a lead-acid battery is provided including positive plates, negative plates, and a separator comprising a material based on glass microfibre or plastic microfibre, or a mixture of both in any proportion, to which a low concentration of high specific surface silica has been added during the manufacturing process, which remains incorporated in the separator structure.

In a preferred embodiment of the invention, the battery is assembled starting from supporting grids with lead-calcium alloy, which are subjected to a pasting process in order to incorporate the active material. Thereafter said pasted plates are subjected to a curing process at a controlled temperature and moisture in order to proceed to develop the internal structure of the plates and to produce oxidation of the remaining free lead, the plates in this way being made ready for the assembly process.

The battery is assembled using a combination of the mentioned plates between which a separator material is interposed, made of glass microfibre, plastic microfibre or mixture of glass microfibre and plastic microfibre to which there has been added during the process of manufacturing the same, silica with a specific surface greater than 700 m²/g in a concentration from 2% to 8% (weight/weight). Once the groups of plates are formed with the separator interposed, they are subjected to the remaining manufacturing processes which comprise:
- Soldering the positive and negative lugs to the connection straps
- Insertion of the soldered groups into the battery container
- Connection of the different battery cells
- Thermo-sealing of the lid
- Filling with acid and carrying out of the electrochemical formation process
- Placement of valves and finishing process.

The silica used is preferably precipitated silica, because it is the one attaining higher specific surface values, being able to reach values higher than 700 m²/g.

In a further embodiment, the separator has a content in plastic microfibres of between 0% and 35% by weight. These plastic microfibres are preferably polyester microfibres.

In another embodiment, the supporting grids of the battery plates are made of lead-low antimony alloy in the positive grids, and of lead-calcium in the negative ones. This allows the invention to be performed in the lead-acid battery systems known as "hybrid", in which the alloy of the positive grids is lead-low antimony alloy instead of lead-calcium, which means that the batteries in which they are applied do not suffer from some problems found when the alloy of the positive grids is lead-calcium.

In yet another embodiment, the grids of both the positive and the negative plates comprise a lead-tin alloy. This allows the invention to be carried out with this alloy that has superior welding properties. The use of a lead-tin alloy also results in plates with superior characteristics concerning folding and bending abilities, which allows manufacturing the battery with non-conventional configurations.

The process of manufacturing batteries according to the invention is carried out in the following manner:

Prior to assembly of the battery components, addition of the silica is performed by adding it to the fibre dispersion tank, inside which it is fully dispersed, through vigorous agitation during the process of manufacturing the separators. Thus, most of the silica is integrated into the separator structure. The addition of the silica is possible because of its very different size with respect to the structure of the separator. In fact, the average size of the silica particles varies, depending on the type, between 8 and 30 nm, whereas the average size of the microfibre separator pore is around 12 µm. This allows incorporation of a relatively high number of particles into the separator structure.

The advantages of these batteries were clearly shown during the tests conducted as described below.

### EXAMPLES

Three groups of batteries were prepared, with the following characteristics:

The first group was considered the control group, assembling for that purpose six recombination batteries using standard design and components, i.e.: lead-calcium alloy in both positive and negative plates, 100% microfibre separator (used as supplied, i.e., without any filler added), the rest of the components being those customary in the art, as known by a skilled person.

The second group is made up of 6 batteries in which only the separator was modified, with respect to the previously mentioned group. These batteries comprised microfibre separator to which 5% silica was added.

Finally, the third group comprised positive plates with lead calcium alloys as well as separators with a 8% silica addition, the rest of the components being identical to those of the first group.

All three groups were subjected to initial characterizing and preparation tests, after which they were subjected to deep cycling tests, with a discharge depth of 80% of the real capacity and a 2 hour discharge regime. Figures 2A, 2B and 2C represent the cycle life endurance obtained as a number of cycles, for the three groups of batteries. The cycles obtained are clearly discerned. Whereas the first group achieves a 500 cycle average duration, the group incorporating the separators with 5% silica addition, reaches 850 cycles. Finally, the group with 8% silica addition to the separators obtains a 950 cycle average duration. Once the cycle tests were completed, the batteries were taken apart and analysed, observing the following facts as the most relevant findings attributable to the separator:

A very low stratification in the density of the sulphuric acid between the upper and lower separator sections (25) was observed in both the second and third groups, with a maximum difference of 0.012 g/cm³, whereas in the first group this difference increased to 0.035. The silica addition has reduced the stratification substantially through the increase in the acid retention capacity in the separator structure due to the pore size decrease caused by the addition of silica.

Additionally, whereas a number of short circuits across the separator, caused by lead particle deposition within its structure, could be observed in the first group, no short circuits could be observed in the second and third group of batteries, where the separator was found to be clean throughout. This is once again a consequence of the smaller pore size and more uniform distribution caused by the addition of silica.

## Claims

1. A valve-regulated lead-acid battery including separators comprising glass microfibres, plastic microfibres or a mixture of both, **characterised in that** the separators consist of the cited glass microfibres, plastic microfibres or a mixture of both and a filler consisting of 2 to 8% (w/w) silica having a specific surface higher than 700 m²/g.

2. A valve-regulated lead-acid battery according to claims 1 wherein the silica is precipitated silica.

3. A valve-regulated lead-acid battery according to any preceding claim, wherein the content of plastic microfibres in the separators is between 0% and 35%.

4. A valve-regulated lead-acid battery according to any preceding claim, wherein the plastic microfibres are polyester microfibres.

5. A valve-regulated lead-acid battery according to any preceding claim, wherein the grids of both the positive and the negative plates comprise a lead-calcium alloy.

6. A valve-regulated lead-acid battery according to claims 1-4, wherein the grids of the positive plates comprise a lead-low antimony alloy, and the grids of the negative plates comprise a lead-calcium alloy.

7. A valve-regulated lead-acid battery according to claims 1-4, wherein the grids of both the positive and the negative plates comprise a lead-tin alloy.

8. A process to manufacture a valve-regulated lead-acid battery according to any preceding claim, **characterised in that** the separator, prior to its assembly with the positive and negative plates, is loaded with a filler consisting of 2 to 8% (w/w) silica having a specific surface higher than 700 m²/g.

9. A process to manufacture a valve-regulated lead-acid battery according to claim 8, wherein the loading of the filler into the separator is carried out by adding the cited filler in the fibre dispersion tank under vigorous agitation during the manufacturing process of the separator.

10. The use of a valve-regulated lead-acid battery according to any one of claims 1 to 7 for high cycle life applications, such as heavy-duty applications.

## Patentansprüche

1. Ventil-gesteuerte Bleibatterie, umfassend Separatoren, die Glas-Mikrofasern, Kunststoff-Mikrofasern oder eine Mischung von beiden umfassen, **dadurch gekennzeichnet, dass** die Separatoren aus den angegebenen Glas-Mikrofasern, Kunststoff-Mikrofasern oder einer Mischung von beiden und einem Füllstoff bestehen, der aus 2 bis 8 % (gewichtsbezogen) Silica mit einer spezifischen Oberfläche von grösser als 700 m²g besteht.

2. Ventil-gesteuerte Bleibatterie gemäss Anspruch 1, worin das Silica gefälltes Silica ist.

3. Ventil-gesteuerte Bleibatterie gemäss irgendeinem vorhergehenden Anspruch, worin der Gehalt an Kunststoff-Mikrofasern in den Separatoren zwischen 0 und 35 % beträgt.

4. Ventil-gesteuerte Bleibatterie gemäss irgendeinem vorhergehenden Anspruch, worin die Kunststoff-Mikrofasern Polyester-Mikrofasern sind.

5. Ventil-gesteuerte Bleibatterie gemäss irgendeinem vorhergehenden Anspruch, worin die Gitter von sowohl den positiven als auch den negativen Platten eine Blei-Calcium-Legierung umfassen.

6. Ventil-gesteuerte Bleibatterie gemäss Ansprüchen 1 bis 4, worin die Gitter der positiven Platten eine Blei-Antimon-Legierung mit geringem Antimonanteil (lead-low antimony alloy) umfassen und die Gitter der negativen Platten eine Blei-Calcium-Legierung umfassen.

7. Ventil-gesteuerte Bleibatterie gemäss Ansprüchen 1 bis 4, worin die Gitter von sowohl den positiven als auch den negativen Platten eine Blei-Zinn-Legierung umfassen.

8. Verfahren zur Herstellung einer Ventil-gesteuerten Bleibatterie gemäss irgendeinem vorhergehenden Anspruch, **dadurch gekennzeichnet, dass** der Separator vor seinem Zusammenbau mit den positiven und negativen Platten mit einem Füllstoff beladen wird, der aus 2 bis 8 % (gewichtsbezogen) Silica mit einer spezifischen Oberfläche von grösser als 700 m²/g besteht.

9. Verfahren zur Herstellung einer Ventil-gesteuerten Bleibatterie gemäss Anspruch 8, worin das Beladen des Füllstoffs in den Separator durch Zugabe des angegebenen Füllstoffs in einen Faser-Dispersionstank unter heftigem Rühren während des Herstellungsverfahrens des Separators durchgeführt wird.

10. Verfahren zur Herstellung einer Ventil-gesteuerten Bleibatterie gemäss irgendeinem der Ansprüche 1 bis 7 für Anwendungen mit grossem Lebenszyklus, wie z.B. Hochleistungsanwendungen.

## Revendications

1. Accumulateur au plomb-acide à régulation par soupape comportant des séparateurs comprenant des microfibres de verre, des microfibres de plastique ou un mélange des deux, **caractérisé en ce que** les séparateurs se composent des microfibres de verre, des microfibres de plastique citées ou d'un mélange des deux, et une matière de remplissage constituée de 2 à 8% (poids/poids) de silice ayant une surface spécifique supérieure à 700 m²/g.

2. Accumulateur au plomb-acide à régulation par soupape selon la revendication 1, dans lequel la silice est une silice précipitée.

3. Accumulateur au plomb-acide à régulation par soupape selon l'une des revendications précédentes, dans lequel la teneur en microfibres de plastique dans les séparateurs est entre 0% et 35%.

4. Accumulateur au plomb-acide à régulation par soupape selon l'une des revendications précédentes, dans lequel les microfibres de plastique sont des microfibres de polyester.

5. Accumulateur au plomb-acide à régulation par soupape selon l'une des revendications précédentes, dans lequel les grilles des plaques positives et négatives comprennent un alliage plomb-calcium.

6. Accumulateur au plomb-acide à régulation par soupape selon les revendications 1-4, dans lequel les grilles des plaques positives comprennent un alliage plomb à faible teneur en antimoine, et les grilles des plaques négatives comprennent un alliage plomb-calcium.

7. Accumulateur au plomb-acide à régulation par soupape selon les revendications 1-4, dans lequel les grilles des plaques positives et négatives comprennent un alliage plomb-étain.

8. Processus de fabrication d'un accumulateur au plomb-acide à régulation par soupape selon l'une des revendications précédentes, **caractérisé en ce que** le séparateur, avant son assemblage avec les plaques positives et négatives, est chargé d'une matière de remplissage constituée de 2 à 8% (poids/poids) de silice ayant une surface spécifique supérieure à 700 m²/g.

9. Processus de fabrication d'un accumulateur au plomb-acide à régulation par soupape selon la revendication 8, dans lequel le chargement de la matière de remplissage dans le séparateur est exécuté en ajoutant la matière de remplissage citée dans le réservoir de dispersion de fibres sous une agitation vigoureuse durant le processus de fabrication du séparateur.

10. Utilisation d'un accumulateur au plomb-acide à régulation par soupape selon l'une quelconque des revendications 1 à 7 pour des applications à durée de vie élevée, telles que des applications renforcées.
